# EUROPÄISCHE PATENTSCHRIFT

(11) **EP 2 343 220 B1**
(45) Veröffentlichungstag und Bekanntmachung des Hinweises auf die Patenterteilung: **20.01.2016**
(21) Anmeldenummer: 11164443.1
(22) Anmeldetag: 19.10.2007
(51) Int. Cl.: B60R 16/02, B60R 16/03, B60R 16/04

(54) **Batterieleitung**
Battery lead
Cable de batterie

(30) Priorität: 24.10.2006 DE 102006050705
(43) Veröffentlichungstag der Anmeldung: 13.07.2011
(62) Teilanmeldung aus: 09170629.1
(73) Patentinhaber: Auto-Kabel Management GmbH, 79688 Hausen i.W. (DE)
(72) Erfinder: Lietz, Franz-Josef, 46049, Oberhausen-Lirich (DE); Dlugokinski, York, 74343 Sachsenheim (DE)
(74) Vertreter: Cohausz & Florack

(56) Entgegenhaltungen:
- WO-A1-2005/081267
- DE-A1- 2 745 189
- DE-A1- 4 343 967
- DE-A1- 10 001 632
- US-A- 5 530 625

## Beschreibung

Die Erfindung betrifft eine Kraftfahrzeugbatterieleitung mit einem ersten Anschlusselement für einen Batteriepol, einem zweiten Anschlusselement für zumindest einen Verbraucher, und einem zwischen dem ersten Anschlusselement und dem zweiten Anschlusselement angeordneten Flachleiter. Die Erfindung betrifft ferner ein Verfahren zur Herstellung eines solches Kraftfahrzeugbatterieleiters.

Batterieleiter, insbesondere B+ Leiter, werden in herkömmlicher Weise als Rundleiter ausgeführt. In vielen Automobilen ist es üblich, die Batterie im Heck des Fahrzeugs anzuordnen, da dort der notwendige Bauraum zur Verfügung steht und dieser im Motorraum eingespart wird. In diesen Fällen ist es notwendig, dass die B+ Leitungen von der Batterie im Heck des Fahrzeugs zu dem Generator im Motorraum geführt wird. Bei der Verwendung von Rundleitern wird dies in herkömmlicherweise durch das Verlegen des Rundleiters in Kabelkanälen gelöst. Bauraumanforderungen bedingen dabei enge Radien. Die Batterieleitung wird angepasst an den Bauraum durch die Karosse des Fahrzeugs geführt. Dabei ergeben sich besondere Formanforderungen insbesondere im Heckbereich als auch im Motorraumbereich, da das Batteriekabel an bauteilbedingte Anforderungen an den Kabelweg angepasst werden muss. Zwischen dem Heckbereich und dem Motorraum verläuft das Batteriekabel häufig durch die Mittelkonsole oder am Unterflur des Fahrzeugs.

In letzter Zeit setzen sich Flachleiter als Batteriekabel, insbesondere als B+ Kabel, durch. Die Verwendung von Flachleitern hat den Vorteil, dass bei gleichem Leiterquerschnitt geringere Bauraumanforderungen notwendig sind. Außerdem können Flachleiter aus Aluminium mit größeren Querschnitten verlegt werden, so dass stets eine notwendige Stromtragfähigkeit gewährleistet ist. Durch die Vergrößerung des Leiterquerschnitts ergeben sich bei der Verwendung von Aluminium auch keine Probleme hinsichtlich des Innenwiderstandes des Batteriekabels.

Es hat sich jedoch gezeigt, dass die aus Flachleitern gebildeten Batteriestränge dann unhandlich sind, wenn kleine Biegeradien erforderlich sind. Aufgrund der Bauraumanforderungen müssen die Batteriestränge formangepasst sein, d. h., sie müssen so geformt sein, dass sie an die Karosse angepasst sind und in dem vorgesehenen Bauraum verbaut werden können. Aufgrund von Bauraumanforderungen kommt es vor, dass die Flachleiter in alle drei Raumrichtungen gebogen sein müssen, um den Anforderungen an den zur Verfügung stehenden Bauraum zu entsprechen. Hierbei kommt es jedoch dazu, dass enge Radien erfordert werden. Die Batterieleiter müssen, um an den vorhandenen Bauraum angepasst zu sein, teilweise mit Radien von nahe 0 cm gebogen werden. Dies führt jedoch zu Problemen bei der Konfektionierung der Batterieleiter.

Darüber hinaus können B+ Leitungen mehrere Meter lang sein. So verläuft die B+ Leitung beispielsweise bei der Heckverlegung - die Batterie ist im Heck verbaut - entlang der gesamten Länge der Karosse bis in den Motorraum, wobei jeweils im Heckbereich als auch im Motorraumbereich eine Vielzahl von Biegungen vorgesehen sind. Jedoch im Bereich der Unterfluranordnung verläuft der Batterieleiter im Wesentlichen gerade. Diese langen Batterieleiter sind problematisch hinsichtlich der Logistik. Bei heutiger Serienfertigung von Automobilen wird eine Lieferung just in time verlangt. Zusätzlich werden auf ein und derselben Fertigungsstraße verschiedene Varianten eines Fahrzeugsmodells hergestellt. Die verschiedenen Varianten erfordern jedoch häufig verschiedenartige Batterieleitungen. Um diese zeitgerecht an dem Montageband zur Verfügung zu stellen, ist eine aufwendige Lagerhaltung notwendig, insbesondere wenn der Transport der langen Batterieleitungen aufwendig ist.

Aus der US 5,530,625 A ist ein gattungsgemäßer mehrstückiger Flachleiter bekannt. Dieser hat aber Nachteile hinsichtlich seiner Einsetzbarkeit, da die Teile des Flachleiters aus dem selben Material gebildet sind.

Die DE 100 01 632 A1 zeigt einen Leistungsunterbrecher, bei dem Flachleiter in der Art eines Schließers übereinander geschoben werden.

Die DE 43 43 967 A1 zeigt eine Kabelsteckvorrichtung für ein flexibles Kabel.

Die DE 27 45 189 A1 zeigt einen elektrischen Stromleiter zwischen einer Batterie und einem Anlasser, wobei dieser als Flachleiter gebildet ist.

Die WO 2005/081267 A1 zeigt ein dreidimensional geformtes, mehrschichtiges Flachkabel.

Aus den vorgenannten Problemen ergibt sich die erfindungsgemäße Aufgabe, eine Kraftfahrzeugbatterieleitung zur Verfügung zu stellen, die komplexen Bauraumanforderungen genügt und gleichzeitig leicht handhabbar ist.

Diese Aufgabe wird erfindungsgemäß durch einen Leiter nach Anspruch 1 und ein Verfahren nach Anspruch 11 gelöst.

Auch ist ein Verfahren zur Herstellung einer Kraftfahrzeugbatterieleitung möglich, bei dem in einem ersten Bearbeitungsschritt zumindest zwei Teile eines Flachleiters gebildet werden, in einem zweiten Bearbeitungsschritt ein erster Teil gebogen wird, und in einem dritten Bearbeitungsschritt die zumindest zwei Teile miteinander verbunden werden. Dieses Ausführungsbeispiel ist mit allen nachfolgenden kombinierbar.

Erfindungsgemäß ist erkannt worden, dass es nicht zwingend notwendig ist, den Batterieleiter einstückig herzustellen und am Montageband zur Verfügung zu stellen. Vielmehr reicht es aus, den Flachleiter erst kurz vor der Montage zu montieren. Für die Logistik ist es vorteilhaft, dass der Flachleiter mehrstückig gebildet ist. Durch den modularen Aufbau der Batterieleitung, bei dem eine Mehrzahl von Teilen die gesamte Batterieleitung bilden können, ist es möglich, auf unterschiedlichste Modellanforderungen reagieren zu können. Beispielsweise ist es denkbar, dass der am Unterboden oder in der Mittelkonsole im Innenraum verlaufende Strang des Batterieleiters gerade gebildet ist und lediglich unterschiedliche Längen hat und die im Heck bzw. im Motorraum verbauten Teile des Batterieleiters verschiedenartig geformt sind, um den Anforderungen an den Bauraum bei verschiedenartigen Modellen oder Modellvarianten genüge zu tun.

Die Modularität des Batterieleiters ermöglicht es, in einem nahe der Montage gelegenen Sequenzierwerk Einzelteile vorzuhalten, welche entsprechend den Anforderungen an das zur Zeit zu fertigende Fahrzeug genügen. So ist es möglich, kurz vor der Montage entsprechende Modellinformationen zur Verfügung zu stellen, woraufhin die Einzelteile der Kraftfahrzeugbatterieleitung miteinander verbunden werden und an die Montagestraße verbracht werden.

Es hat sich gezeigt, dass eine vorteilhafte Verbindung der Teile des Flachleiters formschlüssig und/oder kraftschlüssig und/oder stoffschlüssig gebildet sein kann. Insbesondere bei Flachleitern aus Aluminium ist ein Stoffschluss bevorzugt. In diesem Falle kann der Verbindungswiderstand niedrig gehalten werden, da die isolierenden Aluminiumoxidschichten vermieden werden können. Insbesondere bei Batterieleitern aus Buntmetall, beispielsweise Kupfer oder Messing, reicht ein Formschluss oder Kraftschluss aus, um eine genügend hohe Leitfähigkeit des Übergangs zu gewährleisten. Insbesondere bei Verbindungen zwischen Aluminium und Kupfer muss darauf geachtet werden, dass diese vor Umwelteinflüssen geschützt werden, so dass an den Verbindungen der Teile bevorzugt Schrumpfschläuche vorgesehen sind. Andere Isolationen, beispielsweise durch Umschäumen oder Umspritzen, sind ebenfalls möglich.

Besonders vorteilhaft lassen sich die Teile des Flachleiters miteinander verbinden, indem sie verschweißt werden. Es hat sich gezeigt, dass Punktverschweißen mittels Reibschweißen besonders vorteilhaft ist, jedoch lassen sich die Teile auch mittels Multi-Orbital-Schweißen miteinander fügen.

Biegungen in einer Ebene lassen sich bei einem Flachleiter leicht herstellen. Jedoch wird die Herstellung problematisch, sobald eine zweite Biegung in einer anderen Ebene notwendig wird. Daher wird vorgeschlagen, dass das erste Teil des Flachleiters in einer Ebene parallel zur Längsachse des Flachleiters gebogen ist. Bevorzugt ist der Flachleiter nur in der einen Ebene parallel zur Längsachse des Flachleiters gebogen. Dies hat den Vorteil, dass für den Fall, dass der Bauraum einen ebenen Verlauf des Flachleiters verlangt, das entsprechende Teil an den Bauraum angepasst werden kann.

Sobald Biegungen in einer Ebene senkrecht zur Längsachse des Flachleiters notwendig werden, kann ein zweites Teil des Flachleiters dementsprechend gebogen sein. Durch Verbindung des in der Ebene parallel zur Längsachse gebogenen Teils des Flachleiters mit dem in der Ebene senkrecht zur Längsachse des Flachleiters gebogenen Teils des Flachleiters ist es möglich, Bauraumanforderungen zu genügen, die Biegungen in allen drei Raumrichtungen erfordern. Die Herstellung jedes einzelnen Teils bleibt jedoch kostengünstig.

Ein formangepasstes Teil des Flachleiters ist dazu geeignet, derart geformt zu sein, dass er sich an die Bauraumanforderungen anpasst. Der Flachleiter ist so geformt, dass er an den zur Verfügung gestellten Bauraum angepasst ist. Biegungen werden so geformt, dass sie den Bauraumanforderungen genügen.

Um bei der Herstellung mit geringem Kraftaufwand gebogen werden zu können, ist zumindest ein Teil des Flachleiters aus weichgeglühtem Aluminium gebildet. Da die Teile des Flachleiters an unterschiedlichen Stellen im Fahrzeug verbaut sind, ist erfindungsgemäß vorgesehen, dass ein erstes Teil des Flachleiters weichgeglüht ist. Ein zweites Teil des Flachleiters kann aus verfestigtem, insbesondere kalt verfestigtem Aluminium gebildet sein. Beispielsweise kann das Teil des Flachleiters, das am Unterboden oder in der Mittelkonsole verlegt ist, aus verfestigtem Aluminium gebildet sein und ein anderes Teil des Flachleiters, das eine Vielzahl von Biegungen aufweisen kann, da es formangepasst ist, aus weichgeglühtem Aluminium gebildet sein. Dies ergibt in Kombination eine hohe Steifigkeit als auch eine leichte Herstellbarkeit.

Um das Teil des Flachleiters, das formangepasst ist, leicht verformen zu können, wird vorgeschlagen, dass zumindest dieses Teil des Flachleiters steifelastisch ist. Steifelastisch bedeutet, dass der Flachleiter verformbar ist, jedoch in der Form nach dem Verformen verbleibt.

Um enge Winkel im Verlauf des Batterieleiters zur Verfügung zu stellen, wird vorgeschlagen, dass das zweite Teil des Flachleiters winklig zur Längsachse des ersten Teils mit diesem Teil verbunden ist. Hierdurch können Bögen, insbesondere senkrechte Winkel in dem Batterieleiter zur Verfügung gestellt werden. Es hat sich gezeigt, dass bei engen Radien die Isolierung, die den Flachleiter umschließt, sich aufwölbt. Um dieses Aufwölben zu verhindern, sind bei herkömmlichen Biegeverfahren zusätzliche Maßnahmen, wie beispielsweise Erhitzen des Isolators, notwendig. Wird gemäß des vorteilhaften Ausführungsbeispiels das Teil des Flachleiters winklig zur Längsachse des anderen Teils verbunden, können enge Radien zur Verfügung gestellt werden, ohne aufwendige Biegeverfahren zu verwenden.

Um den Batterieleiter senkrecht zur Längsachse eines Teils führen zu können, wird vorgeschlagen, dass das zweite Teil des Flachleiters mit einer seiner Seitenflächen mit der Stirnfläche des ersten Teils des Flachleiters verbunden ist. Dadurch ist es möglich, Biegungen zur Verfügung zu stellen, die senkrecht zur Längsachse eines ersten Teils verlaufen.

Ein weiterer Gegenstand der Erfindung ist ein Verfahren zur Herstellung einer solchen Kraftfahrzeugbatterieleitung, bei dem in einem ersten Bearbeitungsschritt zumindest zwei Teile eines Flachleiters gebildet werden, zumindest ein aus Aluminium gebildetes Teil des Flachleiters weichgegbüht wird, in einem zweiten Bearbeitungsschritt ein erster Teil gebogen wird und in einem dritten Bearbeitungsschritt die zumindest zwei Teile miteinander verbunden werden.

Weitere Vorteile ergeben sich aus den nachgeordneten Ansprüchen.

Nachfolgend wird die Erfindung anhand einer Ausführungsbeispiele zeigenden Zeichnung näher erläutert. In der Zeichnung zeigen:
- Fig. 1: eine Prinzipdarstellung einer Kraftfahrzeugbatterieleitung:
- Fig. 2: eine Ansicht einer Kraftfahrzeugbatterieleitung mit verschiedenen Teilen und Biegungen;
- Fig. 3: eine Ansicht einer Kraftfahrzeugbatterieleitung mit einem an einer Stirnseite angeordneten Teil:
- Fig. 4: eine Draufsicht auf eine winklige Verbindung zwischen Teilen einer Kraftfahrzeugbatterieleitung.

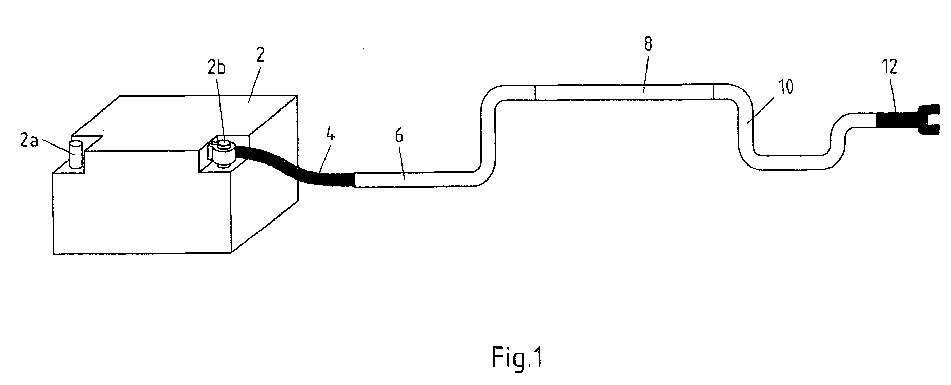

Fig. 1 zeigt eine Batterie 2, insbesondere eine Starterbatterie. An der Batterie 2 sind Batteriepole 2a, 2b zum Anschluss von Verbrauchern vorgesehen. Der Batteriepol 2b ist bevorzugt der B+ Pol der Batterie 2. An dem Batteriepol 2b ist ein Anschlusselement 4, insbesondere ein flexibles Kabel befestigt. Das Anschlusselement 4 weist eine Batterieklemme auf, die an dem Batteriepol 2b verschraubt ist. Die Kraftfahrzeugbatterieleitung ist aus den Teilen 6, 8 und 10 gebildet. Wie zu erkennen ist, ist an dem Teil 6 das Anschlusselement 4 stoffschlüssig verbunden. Das Teil 6 weist Biegungen auf, die derart geformt sind, dass das Teil 6 in den Bauraum der Batterieleitung passt. Die Biegungen an dem Teil 6 sind typspezifisch so geformt, dass diese den Anforderungen der Kraftfahrzeughersteller genügen. Mit dem Teil 6 ist das Teil 8 verbunden. Das Teil 8 ist bevorzugt gerade, insbesondere wenn es in der Mittelkonsole oder am Unterflur des Kraftfahrzeugs angeordnet ist. An dem Teil 8 ist ein Teil 1C angeordnet, welches erneut Biegungen aufweist. An dem Teil 10 ist ein Anschlusselement 12 zum Anschluss an einen elektrischen Verbraucher, insbesondere einen Verbraucher oder einen Erzeuger, beispielsweise einen Generator, wie eine Lichtmaschine angeschlossen.

Die aus den Teilen 6, 8 und 10 bestehende Kraftfahrzeugbatterieleitung wird erst kurz vor der Montage zusammengebaut. Zunächst werden die Teile 6, 8, 10 getrennt voneinander hergestellt. Hierbei wird das Teil 6 und das Teil 10 aus einem Aluminiumband geformt. Es ist möglich, dass die Teile 6, 10 aus einem weichgeglühten Aluminiumband geformt sind. Dieses Aluminiumband wird einem Extruder zugeführt und eine Isolationsschicht wird auf die Teile 6, 10 aufgebracht. Danach werden die Teile 6, 10 in Biegevorrichtungen entsprechend den Bauraumanforderungen der Kraftfahrzeughersteller typspezifisch geformt. Die Biegungen sind bevorzugt lediglich in einer Ebene.

Das Teil 8 wird getrennt von den Teilen 6, 10 hergestellt. Da das Teil 8 bevorzugt gerade ist, ist ein Biegen nicht notwendig. Das Teil 8 ist bevorzugt steifer als die Teile 6, 10, beispielsweise aus kaltverfestigtem Aluminium hergestellt.

Die Teile 6, 8, 10 werden nach der Herstellung zu einem Sequenzierwerk transportiert. In dem Sequenzierwerk wird nach Auftragseingang eine Batterieleitung aus den Teilen 6, 8, 10 geformt. Hierbei wird entsprechend des Auftrags ein formangepasstes Teil 6 und ein formangepasstes Teil 10 entsprechend dem Fahrzeugtyp, in den die Batterieleitung eingebaut werden soll, verwendet. An das Teil 6 wird das Teil 8 angeschweißt. Hierbei kommt insbesondere Rotationsreibschweißen oder Multi-Orbital-Schweißen zum Einsatz. Das Teil 8 hat eine Länge, die den

Anforderungen des Typs des Fahrzeugs entspricht, in welches die Batterieleitung eingebaut werden soll. An das Teil 8 wird das Teil 10 ebenfalls verschweißt. Der so entstandene Batterieleiter wird von dem Sequenzierwerk lediglich an das Montageband verbracht und dort montiert. Dadurch, dass der Batterieleiter erst kurz vor der Montage montiert werden muss, hat er geringe Anforderungen an die Logistik. Es ist nicht notwendig, meterlange Batteriestränge über große Entfernung zu transportieren. Erfindungsgemäß müssen lediglich die Teile 6-10 transportiert werden und erst kurz vor der Montage miteinander verbunden werden.

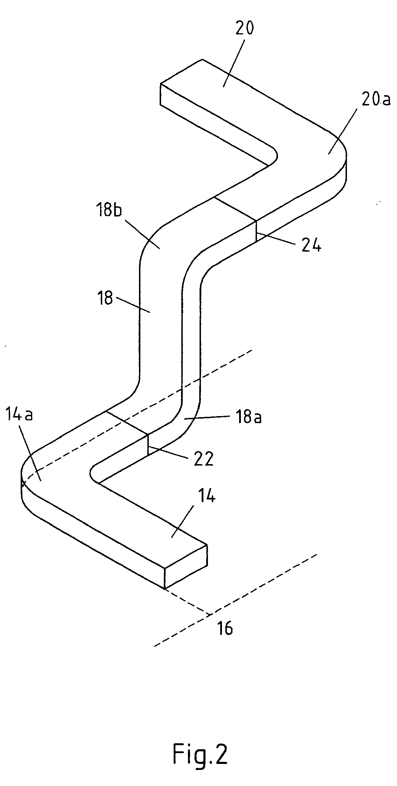

Wie bereits erläutert, werden die Anforderungen an den verfügbaren Bauraum immer strenger, d.h., dass Batterieleitungen mit immer engeren Winkeln und Biegungen hergestellt werden müssen, um in den nur knapp bemessenen Bauraum zu passen. Um Biegungen in verschiedenen Ebenen zur Verfügung zu stellen, bietet die erfindungsgemäße Batterieleitung ein einfaches Lösungskonzept. Wie in der Figur 2 dargestellt ist, ist ein Teil einer Batterieleitung aus den Teilen 14, 18, 20 geformt. Das Teil 14 ist in der Ebene parallel zur Längsachse 16 des Teils 14 gebogen. Der Bogen 14a ist eine Biegung in der Ebene der Längsachse 16. An der Verbindungsstelle 22 ist das Teil 18 mit dem Teil 14 verbunden. In der Biegung 18a ist das Teil 18 so gebogen, dass es aus der Ebene der Längsachse 16 des Teils 14 herausragt. Einen Batterieleiter mit den Biegungen 14a, 18a, die jeweils in unterschiedliche Ebenen abzweigen, wäre in herkömmlicher Weise aufwendig herzustellen. Durch die Verbindung 22 ist es möglich, den Leiter 14 so zu formen, dass lediglich Biegungen 14a in der Ebene der Längsachse 16 vorhanden sind. Der Leiter 18 hat Biegungen 18a, 18b, die senkrecht zur Längsachse des Leiters 18 gebildet sind. Um erneut eine Biegung 20a in einer Ebene parallel zur Längsachse 16 zu ermöglichen, ist das Teil 18 an der Verbindungsstelle 24 mit dem Teil 20 verbunden. Das Teil 20 ist erneut so geformt, dass die Biegung 20a in der Ebene parallel zur Längsachse 16 des Leiters 14 liegt.

Durch die Verbindungen 22, 24 zwischen den Teilen 14, 18, 20, ist es möglich, einen Batterieleiter mit Biegungen in verschiednen Raumrichtungen zur Verfügung zu stellen. Es ist nicht notwendig, aufwendige Herstellungsverfahren zur Verfügung zu stellen, sondern die einzelnen Teile 14, 18, 20 können konfektioniert werden und müssen erst kurz vor der Montage in das Kraftfahrzeug miteinander verbunden werden. Dies minimiert den Herstellungsaufwand und die Transportkosten.

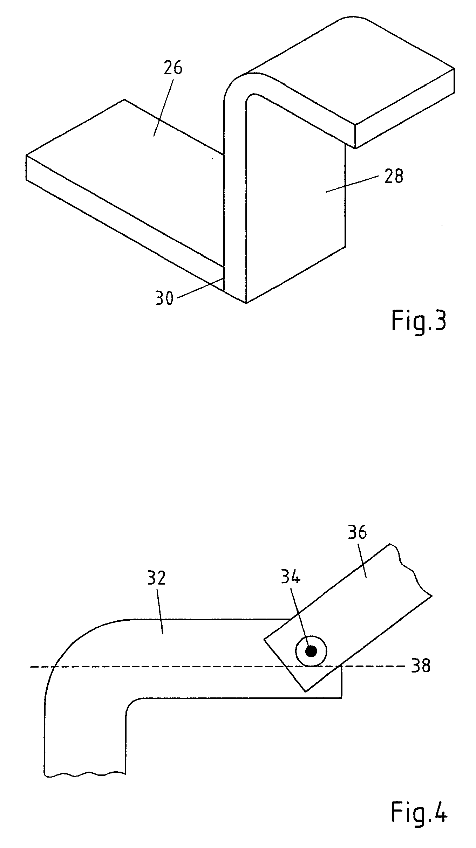

Fig. 3 zeigt zwei Teile 26, 28 einer Batterieleitung, die an der Verbindungsstelle 30 miteinander verbunden sind. Wie in der Figur 3 dargestellt, ist das Teil 28 mit einer seiner Seitenflächen auf der Stirnfläche des Teils 26 angeordnet. Durch die Anordnung des Teils 28 auf der Stirnfläche des Teils 26 lässt sich in der Verbindungsstelle 30 eine rechtwinklige Biegung mit einem Radius von nahezu 0° herstellen. Eine solche Biegung wäre mit einem einstückigem Batterieleiter nicht herstellbar. Durch die dargestellte Verbindung lässt sich die erfindungsgemäße Batterieleitung auch an extreme Bauraumanforderungen anpassen.

Fig. 4 zeigt zwei Teile 32, 36 einer Kraftfahrzeugbatterieleitung. Die Teile 32, 36 sind an der Verbindungsstelle 34 miteinander stoffschlüssig verbunden. Das Teil 36 ist winklig zu der Längsachse 38 des Teils 32 angeordnet. Die Verbindungsstelle 34 ist vorzugsweise durch eine Rotationsreibschweißverbindung hergestellt.

Durch den erfindungsgemäßen modularen Aufbau der Kraftfahrzeugbatterieleitung lassen sich Batterieleitungen mit den verschiedensten Formen herstellen. Die einzelnen Teile der Kraftfahrzeugbatterie lassen sich leicht transportieren und bedarfsgerecht konfektionieren. Die Geraden von nahezu 0° und rechtwinklige Biegungen lassen sich mit Hilfe des modularen Aufbaus der Kraftfahrzeugbatterieleitung herstellen.

## Patentansprüche

1. Kraftfahrzeugbatterieleitung mit
- einem ersten Anschlusselement (4),
- einem zweiten Anschlusselement (12), und
- einem zwischen dem ersten Anschlusselement (4) und dem zweiten Anschlusselement (12) angeordneten Flachleiter, wobei
- der Flachleiter mehrstückig gebildet ist, wobei zumindest zwei Teile (6, 8, 10) des mehrstückigen Flachleiters im Verlauf des Flachleiters miteinander verbunden sind,
**dadurch gekennzeichnet,**
- **dass** zumindest ein Teil (6, 8, 10) des Flachleiters aus weichgeglühtem Aluminium gebildet ist.

2. Kraftfahrzeugbatterieleitung nach Anspruch 1, **dadurch gekennzeichnet, dass** ein erstes Teil (6) des Flachleiters mit einem zweiten Teil (8) des Flachleiters formschlüssig und/oder kraftschlüssig und/oder stoffschlüssig verbunden ist und/oder dass das erste Teil (6) des Flachleiters zumindest mit dem zweiten Teil (8) des Flachleiters verschweißt ist und/oder dass das erste Teil (6) des Flachleiters zumindest mit dem zweiten Teil (8) des Flachleiters mittels Rotationsschweißen punktverschweißt.

3. Kraftfahrzeugbatterieleitung nach einem der vorangehenden Ansprüche, **dadurch gekennzeichnet, dass** das erste Teil (6) des Flachleiters in einer Ebene parallel zur Längsachse des Flachleiters gebogen ist und/oder dass das zweite Teil (8) des Flachleiters in einer Ebene senkrecht zur Längsachse des Flachleiters gebogen ist.

4. Kraftfahrzeugbatterieleitung nach einem der vorangehenden Ansprüche, **dadurch gekennzeichnet, dass** zumindest ein Teil (6, 8, 10) des Flachleiters formangepasst ist.

5. Kraftfahrzeugbatterieleitung nach einem der vorangehenden Ansprüche, **dadurch gekennzeichnet, dass** zumindest ein Teil des Flachleiters steifelastisch geformt ist.

6. Kraftfahrzeugbatterieleitung nach einem der vorangehenden Ansprüche, **dadurch gekennzeichnet, dass** das zweite Teil (8, 10) des Flachleiters winklig zur Längsachse des ersten Teils (6) mit dem ersten Teil (6) verbunden ist.

7. Kraftfahrzeugbatterieleitung nach einem der vorangehenden Ansprüche, **dadurch gekennzeichnet, dass** das zweite Teil (8, 10) des Flachleiters senkrecht zur Längsachse des ersten Teils (6) mit dem ersten Teil (6) verbunden ist.

8. Kraftfahrzeugbatterieleitung nach einem der vorangehenden Ansprüche, **dadurch gekennzeichnet, dass** das zweite Teil (8, 10) des Flachleiters mit einer seiner Seitenflächen mit der Stirnfläche des ersten Teils des Flachleiters verbunden ist.

9. Kraftfahrzeugbatterieleitung nach einem der vorangehenden Ansprüche, **dadurch gekennzeichnet, dass** das zweite Teil (8, 10) des Flachleiters in der Mittelkonsole oder am Fahrzeugflur zwischen Fahrzeugheck und Fahrzeugfront angeordnet ist.

10. Kraftfahrzeugbatterieleitung nach einem der vorangehenden Ansprüche, **dadurch gekennzeichnet, dass** das erste Teil (6) des Flachleiters im Fahrzeugheck angeordnet ist, dass das zweite Teil (8, 10) des Flachleiters die Kraftfahrzeugbatterieleitung zum Motorraum führt, und dass ein dritter Teil des Flachleiters im Motorraum angeordnet ist.

11. Verfahren zur Herstellung einer Kraftfahrzeugbatterieleitung nach Anspruch 1, bei dem
- in einem ersten Bearbeitungsschritt zumindest zwei Teile eines Flachleiters gebildet werden,
- zumindest ein aus Aluminium gebildetes Teil (6, 8, 10) des Flachleiters weichgeglüht wird,
- in einem zweiten Bearbeitungsschritt ein erstes Teil gebogen wird, und
- in einem dritten Bearbeitungsschritt die zumindest zwei Teile miteinander verbunden werden.

12. Verfahren nach Anspruch 11, **dadurch gekennzeichnet, dass** in dem zweiten Bearbeitungsschritt das erste Teil in einer Ebene parallel zu seiner Längsachse gebogen wird und/oder dass in dem zweiten Bearbeitungsschritt ein zweites Teil in einer Ebene senkrecht zu seiner Längsachse gebogen wird.

13. Verfahren nach einem der vorangehenden Ansprüche, **dadurch gekennzeichnet, dass** die ersten beiden Bearbeitungsschritte in einer ersten Fertigungshalle vorgenommen werden, dass die Teile zu einer Sequenzfertigung geliefert werden, und dass erst in der Sequenzfertigung das erste Teil mit dem zweiten Teil verbunden wird.

14. Verfahren nach einem der vorangehenden Ansprüche, **dadurch gekennzeichnet, dass** das zweite Teil winklig zur Längsachse des ersten Teils mit dem ersten Teil verbunden wird und/oder dass das zweite Teil winklig in einer Ebene senkrecht zur Längsachse des ersten Teils mit dem ersten Teil verbunden wird.

15. Verfahren nach einem der vorangehenden Ansprüche, **dadurch gekennzeichnet, dass** der zweite Flachleiter stoffschlüssig mit dem ersten Flachleiter verbunden wird.

## Claims

1. Motor vehicle battery lead with
- a first connection element (4),
- a second connection element (12), and
- a flat conductor arranged between the first connection element (4) and the second connection element (12),
- wherein the flat conductor is formed in a number of parts, wherein at least two parts (6, 8, 10) of the multi-part flat conductor are connected to each other over the course of the flat conductor,
**characterized in that**
at least a first part (6, 8, 10) of the flat conductor is formed from soft annealed aluminium.

2. Motor vehicle battery lead according to claim1, **characterized in that** the first part (6) of the flat conductor boded to the second part (8) of the flat conductor by material fit, form fit and/or force fit and/or the first part (6) of the flat conductor is welded at least with the second part (8) of the flat conductor and/or that the first part (6) of the flat conductor is spot welded at least with the second part (8) of the flat conductor by means of rotation welding.

3. Motor vehicle battery lead according to any one of the preceding claims, **characterized in that** the first part (6) of the flat conductor is bent in a plane parallel to the longitudinal axis of the flat conductor and/or that the second part (8) of the flat conductor is bent in a plane perpendicular to the longitudinal axis of the flat conductor.

4. Motor vehicle battery lead according to any one of the preceding claims, **characterized in that** at least one part (6, 8, 10) of the flat conductor is form tailored.

5. Motor vehicle battery lead according to any one of the preceding claims, **characterized in that** at least one part of the flat conductor is formed rigidly elastic.

6. Motor vehicle battery lead according to any one of the preceding claims, **characterized in that** the second part (8, 10) of the flat conductor is connected to the first part (6) in an angle to the longitudinal axis of the first part (6).

7. Motor vehicle battery lead according to any one of the preceding claims, **characterized in that** the second part (8, 10) of the flat conductor is connected to the first part (6) perpendicular to the longitudinal axis of the first part (6).

8. Motor vehicle battery lead according to any one of the preceding claims, **characterized in that** the second part (8, 10) of the flat conductor is connected with one of its sides to the front face of the first part of the flat conductor.

9. Motor vehicle battery lead according to any one of the preceding claims, **characterized in that** the second part (8, 10) of the flat conductor is arranged in the central console or along the vehicle floor between the vehicle rear and the vehicle front.

10. Motor vehicle battery lead according to any one of the preceding claims, **characterized in that** the first part (6) of the flat conductor is arranged in the vehicle rear, **in that** the second part (8, 10) of the flat conductor guides the motor vehicle battery lead to the engine compartment, and **in that** a third part of the flat conductor is located in the engine compartment.

11. Method for producing a motor vehicle battery lead according to claim 1, wherein
- at least two parts of a flat conductor are formed in a first process step,
- at least one part (6, 8, 10) is formed from soft annealed aluminium,
- a first part is bent in a second process step, and
- at least said two parts are connected to each other in a third process step.

12. Method according to claim 11, **characterized in that** in a second processing step the first part is bent in a plane parallel to its longitudinal axis and/or that in the second processing step a second part is bent in a plane perpendicular its longitudinal axis.

13. Method according to any one of the preceding claims, **characterized in that** the first two process steps are carried out in a first production line, **in that** the parts are sent for sequential production, and **in that** the first part is only connected to the second part during sequential production.

14. Method according to any one of the preceding claims, **characterized in that** the second part is connected to the first part at an angle to the longitudinal axis of the first part and/or that the second part is connected to the first part at an angle in one plane perpendicular to the longitudinal axis of the first part.

15. Method according to any one of the preceding claims, **characterized in that** the second flat conductor is connected with a material fit to the first flat conductor.

## Revendications

1. Câble de batterie pour véhicule automobile qui comprend
- un premier élément de raccordement (4),
- un deuxième élément de raccordement (12),
- un conducteur plat, disposé entre le premier élément de raccordement (4) et le deuxième élément de raccordement (12),
sachant que le conducteur plat est composé de plusieurs parties, au moins deux parties (6, 8, 10) du conducteur plat à plusieurs parties étant reliées ensemble dans le tracé du conducteur plat,
**caractérisé** en ce au moins une première partie du conducteur plat est fait d'aluminium recuit au doux.

2. Câble de batterie selon la revendication 1, **caractérisé en ce que**
la première partie (6) du conducteur plat est relié de manière positive et/ou relié de manière cohésive et/ou relié de manière friction avec la deuxième partie (8) du conducteur plat et/ou la première partie (6) du conducteur plat est soudée au moins avec la deuxième partie (8) du conducteur plat et/ou la première partie (6) du conducteur plat est soudée au moins avec la deuxième partie (8) du conducteur plat par soudure par rotation.

3. Câble de batterie selon l'une des revendications précédentes, **car actérisé** en ce que la première partie (6) du conducteur plat est courbée dans un plan, parallèlement à l'axe longitudinal du conducteur plat et/ou la deuxième partie (8) du conducteur plat du conducteur plat est courbée dans un plan, perpendiculairement à l'axe longitudinal du conducteur plat.

4. Câble de batterie selon l'une des revendications précédentes, **car actérisé** en ce qu'au moins une partie (6, 8, 10) du conducteur plat est adapté de forme.

5. Câble de batterie selon l'une des revendications précédentes, **car actérisé** en ce qu'au moins une partie du conducteur plat est de conception rigide élastique.

6. Câble de batterie selon l'une des revendications précédentes, **car actérisé** en ce que la deuxième partie (8, 10) du conducteur plat est reliée à la première partie (6) du conducteur plat angulaire à l'axe longitudinal de la première partie (6) du conducteur plat.

7. Câble de batterie selon l'une des revendications précédentes, **car actérisé** en ce que la deuxième partie (8, 10) du conducteur plat est reliée à la première partie (6) du conducteur plat perpendiculairement à l'axe longitudinal de la première partie (6) du conducteur plat.

8. Câble de batterie selon l'une des revendications précédentes, **car actérisé** en ce que la deuxième partie (8, 10) du conducteur plat est reliée par l'une de ses faces latérales à la face frontale de la première partie du conducteur plat.

9. Câble de batterie selon l'une des revendications précédentes, **car actérisé** en ce que la deuxième partie (8, 10) du conducteur plat est installée dans la console centrale ou sur le dégagement, entre l'arrière et l'avant d'un véhicule automobile.

10. Câble de batterie selon l'une des revendications précédentes, **car actérisé** en ce que la première partie (6) du conducteur plat est disposée dans la partie arrière du véhicule automobile, que la deuxième partie (8, 10) du conducteur plat amène le câble de batterie au compartiment moteur et qu'une troisième partie du conducteur plat est installée dans le compartiment moteur.

11. Procédé pour la fabrication d'un câble de batterie pour véhicule automobile selon la revendication 1, dans lequel
- au moins deux tronçons conducteurs plats sont formés au cours d'une première phase du processus,
- au moins une première partie du conducteur plat est fait d'aluminium recuit au doux,
- une première partie est pliée au cours d'une deuxième phase du processus,
- au moins les deux tronçons cités sont reliés ensemble au cours d'une troisième phase du processus.

12. Procédé selon la revendication 11, caractérisé en ce au cours de la deuxième phase du processus la première partie est courbée dans un plan, parallèlement à l'axe longitudinal et/ou de la deuxième phase du processus la deuxième partie (8) est courbée dans un plan, perpendiculairement à l'axe longitudinal.

13. Procédé selon la revendication précédente, **caractérisé en ce que** les deux premières phases du processus sont exécutées dans un premier hall de fabrication, que les tronçons sont délivrés pour une fabrication séquentielle et que le premier tronçon est relié au deuxième tronçon seulement lors de la fabrication séquentielle.

14. Procédé selon l'une des revendications précédentes, **caractérisé en ce que** le deuxième tronçon est relié au premier tronçon en formant un angle par rapport à l'axe longitudinal du premier tronçon et/ou ce que le deuxième tronçon est relié au premier tronçon en formant un angle dans un plan perpendiculaire à l'axe longitudinal du premier tronçon.

15. Procédé selon l'une des revendications précédentes, **caractérisé en ce que** le deuxième conducteur plat est relié au premier conducteur plat.
